# EUROPÄISCHE PATENTSCHRIFT

(11) **EP 4 255 748 B1**
(45) Veröffentlichungstag und Bekanntmachung des Hinweises auf die Patenterteilung: **04.11.2026**
(21) Anmeldenummer: 21819362.1
(22) Anmeldetag: 22.11.2021
(51) Int. Cl.: B60H 1/00, B60N 3/10

(54) **KRAFTFAHRZEUG MIT EINEM TEMPERIERBEHÄLTER**
VEHICLE COMPRISING A TEMPERATURE-CONTROLLED CONTAINER
VÉHICULE AUTOMOBILE COMPRENANT UN RÉCIPIENT DE MAINTIEN EN TEMPÉRATURE

(30) Priorität: 02.12.2020 DE 102020131978
(43) Veröffentlichungstag der Anmeldung: 11.10.2023
(73) Patentinhaber: AUDI AG, 85057 Ingolstadt (DE)
(72) Erfinder: REBINGER, Christian, 80807 München (DE); SCHROEDER, Dirk, 85077 Manching (DE)
(86) Internationale Anmeldenummer: PCT/EP2021/082407
(87) Internationale Veröffentlichungsnummer: WO 2022/117376

(56) Entgegenhaltungen:
- EP-A1- 3 738 804
- DE-A1- 102016 219 103
- DE-A1- 102018 202 142
- JP-A- S60 121 138

## Beschreibung

Die Erfindung betrifft ein Kraftfahrzeug mit einem Temperierbehälter, einem ersten Wärmeübertrager für die Temperierung des Temperierbehälters, und mit einem Temperierbehälter-Kältemittelkreislauf, der mit dem ersten Wärmeübertrager verbunden ist und der einen Kältemittelverdichter sowie ein dem ersten Wärmeübertrager zugeordnetes Expansionsventil aufweist.

Aus der nachveröffentlichten DE 10 2020 115 810.6 ist ein Kühlbehälter bekannt.

Aus der DE 10 2018 202 142 A1 ist ein Tiefkühl-Aufbewahrungsraum für ein Kraftfahrzeug gemäß dem Oberbegriff von Anspruch 1 bekannt,.

Aus der nachveröffentlichten DE 10 2019 210 084.8 ist eine Kühlboxeinrichtung für ein Kraftfahrzeug bekannt, die einen Luftzufuhrkanal aufweist, der dazu dient, Abluft aus dem Fahrzeuginnenraum oder aus Luft aus der Fahrzeugumgebung anzusaugen, so dass mittels der angesaugten Luft, dem Kühlgut entzogene Wärme abgeführt werden kann.

Ferner wird ergänzend auf die JP S60 121 138 A, EP 3 738 804 A1 und DE 10 2016 219 103 A1 hingewiesen.

Die der Erfindung zu Grunde liegende Aufgabe wird darin gesehen, neben einer Kühlfunktion auch eine Warmhaltefunktion bzw. Erwärm-/ Aufheizfunktion für einen Temperierbehälter in einem Kraftfahrzeug bereitzustellen.

Diese Aufgabe wird gelöst durch ein Kraftfahrzeug mit einem Temperierbehälter mit den Merkmalen des Patentanspruchs 1. Vorteilhafte Ausgestaltungen mit zweckmäßigen Weiterbildungen sind in den abhängigen Patentansprüchen angegeben.

Vorgeschlagen wird also ein Kraftfahrzeug mit einem Temperierbehälter, einem ersten Wärmeübertrager für die Temperierung des Temperierbehälters, einem Temperierbehälter-Kältemittelkreislauf, der mit dem ersten Wärmeübertrager verbunden ist und der einen Kältemittelverdichter sowie ein dem ersten Wärmeübertrager zugeordnetes Expansionsventil aufweist, einer weiteren Wärmeübertrageranordnung, die wenigstens einen zweiten Wärmeübertrager aufweist, der mit einem Kühlmittelkreislauf des Kraftfahrzeugs verbunden ist, wobei der Kühlmittelkreislauf mit wenigstens einer elektrischen Antriebs- oder Speicherkomponente, insbesondere einer Batterie des Kraftfahrzeugs, zu deren Kühlung verbunden ist, und wobei der Kühlmittelkreislauf einen Chiller aufweist, der mit einem Fahrzeug-Kältemittelkreislauf verbunden ist, und/oder einen über Umgebungsluft gekühlten Niedertemperatur-Kühler aufweist. Dabei ist vorgesehen, dass der Temperierbehälter-Kältemittelkreislauf dazu eingerichtet ist, Kältemittel in unterschiedlichen Strömungsrichtungen durch den ersten Wärmeübertrager zu leiten.

Mit anderen Worten kann der erste Wärmeübertrager bi-direktional durchströmt werden. Entsprechend kann der erste Wärmeübertrager als Verdampfer zur Kühlung oder als Kondensator bzw. Gaskühler zur Erwärmung des Temperierbehälters bzw. der in dem Temperierbehälter befindlichen Luft dienen.

Analog zu dem ersten Wärmeübertrager kann auch die weitere Wärmeübertrageranordnung, insbesondere der mindestens eine zweite Wärmeübertrager, bi-direktional durchströmt werden. Entsprechend kann der zweite Wärmeübertrager als Kondensator bzw. Gaskühler zur Übertragung der im Kältemittel aus dem Kühlprozess gebundenen Wärme eingesetzt werden oder als Verdampfer zur Verdampfung des Kältemittels und zur Generierung von Wärmeleistung für den Temperierbehälter dienen. Somit kann auf einfache Weise der bestehende Temperierbehälter-Kältemittelkreislauf dazu eingesetzt werden, neben einer Kühlfunktion auch eine Wärmfunktion bereitzustellen.

Bei dem Kraftfahrzeug weist der Temperierbehälter-Kältemittelkreislauf einen Umkehrleitungsabschnitt auf, der stromabwärts von dem Kältemittelverdichter und stromaufwärts von dem zweiten Wärmeübertrager abzweigt. Durch den Umkehrleitungsabschnitt kann die Strömungsrichtung des Kältemittels im Temperierbehälter-Kältemittelkreislauf stromabwärts von dem Kältemittelverdichter verändert werden, insbesondere um die Wärmfunktion mittels des ersten Wärmeübertragers bereitstellen zu können.

Dabei kann der Umkehrleitungsabschnitt stromaufwärts von dem Kältemittelverdichter und zwischen dem ersten Wärmeübertrager und dem Kältemittelverdichter derart münden bzw. abzweigen, dass vom Kältemittelverdichter unter Hochdruck gefördertes Kältemittel durch den ersten Wärmeübertrager strömt. Somit kann erhitztes und unter Hochdruck stehendes Kältemittel in den ersten Wärmeübertrager gefördert werden, so dass beim Kondensieren bzw. Abkühlen des Kältemittels im ersten Wärmeübertrager Wärme an den Temperierbehälter bzw. die darin befindliche Luft abgegeben werden kann.

Bei dem Kraftfahrzeug kann der Temperierbehälter-Kältemittelkreislauf wenigstens eine Ventileinrichtung, insbesondere wenigstens ein 3/2-Wege-Ventil, aufweisen, die dazu eingerichtet ist, den Kältemittelfluss durch den Umkehrleitungsabschnitt zu ermöglichen oder zu verhindern. Hierdurch können die Kühlfunktion oder die Wärmefunktion des Temperierbehälters wahlweise eingestellt werden.

Bei einem derartigen Kraftfahrzeug liegt die Temperatur des Kühlmittels, beispielsweise Wasser oder Wasser-Glykol-Gemisch, im Kühlmittelkreislauf der elektrischen Komponente in den meisten Fällen auf Umgebungstemperaturniveau oder darunter. Entsprechend kann in dem ersten Wärmeübertrager des Temperierbehälter-Kältemittelkreislaufs das verdichtete Kältemittel zuverlässig auf eine Temperatur bzw. ein Druckniveau abgekühlt (kondensiert) werden, so dass beim späteren Verdampfen das gewünschte Temperaturniveau für die Kühlfunktion, insbesondere ein Kühlschrank-Temperaturniveau von etwa 2°C bis 8°C, eingestellt werden kann.

Für die Wärmefunktion kann bei entsprechend eingestellter Strömungsrichtung von Kältemittel im Temperierbehälter-Kältemittelkreislauf die im Kühlmittelkreislauf gebundene bzw. zirkulierende Wärme (Abwärme von der mindestens einen elektrischen Fahrzeugkomponente gemeinsam mit der vom Verdichter ins Kältemittel übertragenen Wärme aus der bereitzustellenden Antriebsleistung) genutzt werden.

Sollte das System weiteres Potenzial hinsichtlich einer Reduktion des Verdampfungstemperaturniveaus aufweisen, so kann der Temperierbehälter in seiner Funktionalität auf einen Gefrierbehälter hinsichtlich des Betriebsbereichs ausgeweitet werden. Durch Absenken des Verdampfungsdruckniveaus des Kältemittels in dem ersten Wärmeübertrager, können Verdampfungstemperaturen erzielt werden, die es ermöglichen, Temperaturen unter dem Gefrierpunkt in dem Temperierbehälter einzustellen.

Die in einem solchen Falle zusätzlich in Betracht zu ziehende behälterinterne Vereisung wird im Rahmen dieser Anmeldung aber nicht weiter im Detail betrachtet.

Bei dem Kraftfahrzeug kann die weitere Wärmeübertrageranordnung einen direkt mit Luft, insbesondere (Teil-)Umluft oder/und Frischluft, beaufschlagten Kondensator bzw. Gaskühler als zweiten Wärmeübertrager aufweisen, der in dem Temperierbehälter-Kältemittelkreislauf angeordnet ist, und einen mit dem Kühlmittelkreislauf verbundenen dritten Wärmeübertrager aufweisen.

Durch die Anordnung von mindestens zwei Wärmeübertragern, die für den Temperierbehälter-Kältemittelkreislauf thermisch wirksam sind, ist es möglich, den Temperierbehälter effizient zu kühlen bzw. zu erwärmen.

Dabei kann der dritte Wärmeübertrager mit Luft, insbesondere Umluft oder/und Frischluft, beaufschlagt sein und bezogen auf die Luftströmungsrichtung stromaufwärts von dem zweiten, mit Luft beaufschlagten Wärmeübertrager angeordnet sein.

In einer Alternative kann der dritte Wärmeübertrager ein indirekter Gaskühler oder ein indirekter Kondensator sein, der im Temperierbehälter -Kältemittelkreislauf angeordnet ist und in Strömungsrichtung des Kältemittels stromabwärts oder stromaufwärts von dem zweiten, mit Luft beaufschlagten Wärmeübertrager angeordnet ist.

Die Anordnung der beiden als Kondensator bzw. Gaskühler arbeitenden (zweiten und/oder dritten) Wärmeübertrager des Temperierbehälter -Kältemittelkreislaufs ist, insbesondere im Rahmen einer mehrstufigen Kühlung, so zu wählen, dass bevorzugt der Wärmeübertrager, der in den überwiegenden Betriebsfällen das niedrigere Kühltemperaturniveau ausweist, dem Wärmeübertrager mit dem zumeist höheren Temperaturniveau nachgeschaltet ist.

Durch die beiden genannten Alternativen der Kombination von zweitem und drittem Wärmeübertrager in der Wärmeübertrageranordnung des Temperierbehälters kann je nach Temperaturlevel am Temperierbehälter, eine jeweilige Wärmesenke, also zweiter oder/und dritter Wärmeübertrager, gezielt aktiv ein-/ausgeschaltet werden, insbesondere auch beide gemeinsam hinzugeschaltet werden.

In dem Kühlmittelkreislauf kann eine Bypassanordnung vorgesehen sein, die dazu eingerichtet ist, Kühlmittel an der weiteren Wärmeübertrageranordnung vorbei zu leiten. Hierdurch kann gewährleistet werden, dass der mit dem Kühlmittelkreislauf in Verbindung stehende Wärmeübertrager, insbesondere der dritte Wärmeübertrager, nicht von Kühlmittel durchströmt wird und somit nicht als Wärmesenke bzw. alternativ als Wärmequelle zur Verfügung steht.

Eine solche Bypassanordnung kann beispielsweise in Strömungsrichtung von Kühlmittel stromabwärts von der zu kühlenden elektrischen Komponente (Batterie) einen mittels eines entsprechenden Absperrorgans absperrbaren Bypasszweig aufweisen, der strömungstechnisch parallel zu dem ( dritten) Wärmeübertrager angeordnet ist. Ferner kann in dem Kühlmittelkreislauf ein weiteres Absperrorgan vorgesehen sein, um ein Durchströmen des betreffenden (dritten) Wärmeübertragers mit Kühlmittel zu sperren bzw. freizugeben. Besagte Absperrorgane können in einem weiteren Schritt als Kombinationsventile, wie bspw. als 3-2-Wege-Ventil oder auch Mischventil, ausgeführt sein.

Ergänzend beschrieben wird auch ein Temperierbehälter-Kältemittelkreislauf für einen oben beschriebenen Temperierbehälter, wobei der Temperierbehälter-Kältemittelkreislauf umfasst:
Einen ersten Wärmeübertrager für die Temperierung des Temperierbehälters, einen Kältemittelverdichter sowie ein dem ersten Wärmeübertrager zugeordnetes Expansionsventil, und
eine weitere Wärmeübertrageranordnung, die wenigstens einen zweiten Wärmeübertrager aufweist, der mit einem Kühlmittelkreislauf des Kraftfahrzeugs verbunden ist, wobei der Kühlmittelkreislauf mit wenigstens einer elektrischen Antriebs- oder Speicherkomponente, insbesondere einer Batterie des Kraftfahrzeugs, zu deren Kühlung verbunden ist, und wobei der Kühlmittelkreislauf einen Chiller aufweist, der mit einem Fahrzeug-Kältemittelkreislauf verbunden ist, oder einen über Umgebungsluft gekühlten Niedertemperatur-Kühler. Dabei ist vorgesehen, dass der Temperierbehälter-Kältemittelkreislauf dazu eingerichtet ist, Kältemittel in unterschiedlichen Strömungsrichtungen durch den ersten Wärmeübertrager zu leiten.

Das Kraftfahrzeug kann elektrisch angetrieben sein, wobei das Kraftfahrzeug einen Hochvoltspeicher aufweist, der mittels des Kühlmittelkreislaufs kühlbar ist, wobei der Temperierbehälter mit seinem Temperierbehälter-Kältemittelkreislauf bevorzugt in einem hinteren Bereich des Kraftfahrzeugs angeordnet ist, insbesondere zumindest teilweise in einem heckseitigen Kofferraum angeordnet ist.

Bei Kraftfahrzeug kann der Temperierbehälter eine verschließbare Öffnung aufweisen, die einem Innenraum des Kraftfahrzeugs zugewandt ist, derart, dass zu temperierendes Gut vom Innenraum her in den Temperierbehälter einfüllbar oder aus diesem entnehmbar ist.

Je nach Ausführungsweise des einen Temperierbehälter aufweisenden Fahrzeuges ist die Unterbringung eines solchen Temperierbehälters auch in weiteren Fahrzeugpositionen vorstellbar. Insbesondere können Unterbringungspositionen des Temperierbehälters auch in Abhängigkeit davon gewählt werden bzw. sein, ob auch während der Fahrt zu temperierendes Gut zuführbar oder entnehmbar ist. Der hier beschriebene Temperierbehälter kann auch als Thermobox bezeichnet werden.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: einen Temperierbehälter-Kältemittelkreislauf, der mit einem Kühlmittelkreislauf für eine elektrische Komponente eines Kraftfahrzeugs thermisch gekoppelt ist, als erste Ausführungsform der Erfindung;
- Fig. 2: einen Temperierbehälter-Kältemittelkreislauf, der mit einem Kühlmittelkreislauf für eine elektrische Komponente eines Kraftfahrzeugs thermisch gekoppelt ist, als zweite Ausführungsform der Erfindung;
- Fig. 3: einen Temperierbehälter-Kältemittelkreislauf, der mit einem Kühlmittelkreislauf für eine elektrische Komponente eines Kraftfahrzeugs thermisch gekoppelt ist, als dritte Ausführungsform der Erfindung;

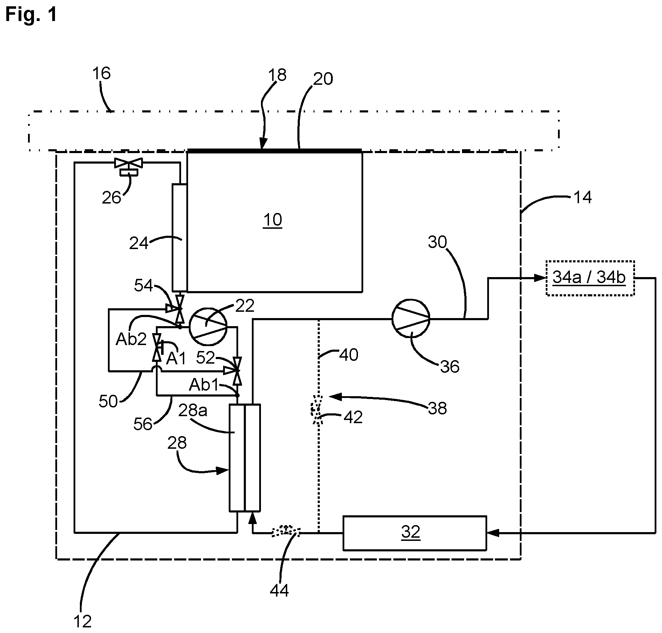

In den Fig. 1 bis 3 ist jeweils ein Temperierbehälter 10 ersichtlich mit einem dem Temperierbehälter 10 zugeordneten Temperierbehälter-Kältemittelkreislauf 12. Der Temperierbehälter 10 kann beispielsweise im Bereich eines Kofferraums 14 eines Kraftfahrzeugs angeordnet sein. Der Temperierbehälter 10 kann ferner eine zu einer Sitzeinrichtung 16 (beispielsweise Rückbank oder nebeneinander angeordnete Einzelsitze bzw. Sitzschalen) verschließbare Öffnung 18 aufweisen. Hierzu kann beispielsweise ein Deckel- bzw. Türelement 20 vorgesehen sein. Die Öffnung 18 kann also dem Innenraum des Kraftfahrzeugs zugewandt sein, derart, dass zu temperierendes Gut, beispielsweise Kühlgut oder warmzuhaltendes Gut, vom Innenraum her in den Temperierbehälter 10 einfüllbar oder aus diesem entnehmbar ist.

Sollte eine Befüllung und Entleerung des Temperierbehälters 10 zusätzlich über den Kofferraum 14 eines Fahrzeuges erfolgen können, kann zusätzlich zu dem dem Innenraum zugewandten Deckel- bzw. Türelement 20 mindestens ein weiteres (nicht dargestelltes) Deckel- bzw. Türelement vorgesehen sein. Der Temperierbehälter 10 weist somit mindestens ein Deckel- bzw. Türelement 20 auf.

Der Temperierbehälter-Kältemittelkreislauf 12 umfasst einen Kältemittelverdichter 22, einen ersten Wärmeübertrager 24 und ein dem ersten Wärmeübertrager 24 zugeordnetes Expansionsventil 26. Stromabwärts von dem Kältemittelverdichter 22 ist eine weitere Wärmeübertrageranordnung 28 angeordnet, die mit einem Kühlmittelkreislauf 30 des Kraftfahrzeugs verbunden ist. In dem Temperierbehälter-Kältemittelkreislauf 12 kann ein hochdruckseitiger oder ein niederdruckseitiger Kältemittelsammler vorgesehen sein. Als Kältemittel für den Temperierbehälter-Kältemittelkreislauf 12 kann beispielsweise R744 eingesetzt werden, insbesondere auch für einen Gefrierbetrieb.

Der Kühlmittelkreislauf 30 kann mit wenigstens einer elektrischen Antriebs- oder Speicherkomponente 32, hier beispielsweise einer Batterie 32 des Kraftfahrzeugs, zu deren Kühlung verbunden sein. Der Kühlmittelkreislauf 30 kann einen Chiller 34a aufweisen, der mit einem Fahrzeug-Kältemittelkreislauf (zur Klimatisierung des Kraftfahrzeugs) verbunden ist, und/oder einen über Umgebungsluft gekühlten Niedertemperatur-Kühler 34b. Der Chiller 34a und der Niedertemperatur-Kühler 34b sind hier stark vereinfacht als gestricheltes Rechteck dargestellt. Über den Chiller 34a bzw. den Niedertemperatur-Kühler 34b kann an der elektrischen Komponente (Batterie) 32 entstehende Wärme abgegeben werden. Der Kühlmittelkreislauf 30 umfasst ferner mindestens eine Pumpe 36, die für eine Zirkulation von Kühlmittel in dem Kühlmittelkreislauf 30 sorgt.

Der Kühlmittelkreislauf 30 ist stromabwärts von der elektrischen Komponente 32 mit der Wärmeübertrageranordnung 28 verbunden und somit mit dem Temperierbehälter-Kältemittelkreislauf 12 thermisch gekoppelt.

Eine genaue Positionierung, insbesondere Reihenfolge in der Anordnung der Komponenten in dem Kühlmittelkreislauf 30 kann je nach Anwendungsfall unterschiedlich ausgeführt werden und ist gemäß der an das System gesetzten Anforderungen entsprechend festzulegen.

Die in den Fig. 1 bis 3 gezeigten Ausführungsformen des Temperierbehälter-Kältemittelkreislaufs 12 sind alle derart ausgeführt, dass der erste Wärmeübertrager 24 bi-direktional durchströmbar ist. Mit anderen Worten kann der erste Wärmeübertrager 24 als Verdampfer zur Kühlung des Temperierbehälters 10 arbeiten oder als Gaskühler bzw. Kondensator zur Erwärmung des Temperierbehälters 10.

Analog zu dem ersten Wärmeübertrager 24 ist auch die weitere Wärmeübertrageranordnung 28, wie der zweite oder weitere Wärmeübertrager 28a, 28 b, 28c, bi-direktional durchströmbar und arbeitet, je nach Betriebsmodus des Temperierbehälter-Kältemittelkreislauf 12 als Kondensator bzw. Gaskühler oder als Verdampfer.

Um die Strömungsrichtung von Kältemittel durch den ersten Wärmeübertrager 24 bzw. den Temperierbehälter-Kältemittelkreislauf 12 anpassen bzw. einstellen zu können, ist ein Umkehrleitungsabschnitt 50 mit dem Temperierbehälter-Kältemittelkreislauf 12 verbunden bzw. darin vorgesehen bzw. angeordnet. Der Umkehrleitungsabschnitt 50 zweigt stromabwärts von dem Kältemittelverdichter 22 und stromaufwärts von dem zweiten Wärmeübertrager 28a bzw. der weiteren Wärmeübertrageranordnung 28 ab. Der Umkehrleitungsabschnitt 50 mündet stromaufwärts von dem Kältemittelverdichter 22 und zwischen dem ersten Wärmeübertrager 24 und dem Kältemittelverdichter 22 derart ein, dass vom Kältemittelverdichter 22 unter Hochdruck gefördertes Kältemittel durch den ersten Wärmeübertrager 24 strömen kann.

Der Temperierbehälter-Kältemittelkreislauf 12 weist wenigstens eine Ventileinrichtung 52, 54, insbesondere wenigstens ein 3/2-Wege-Ventil, auf, die dazu eingerichtet ist, den Kältemittelfluss durch den Umkehrleitungsabschnitt 50 zu ermöglichen oder zu verhindern. Im gezeigten Beispiel sind eine erste Ventileinrichtung 52 und eine zweite Ventileinrichtung 54 vorgesehen, die jeweils an den Abzweigen des Umkehrabschnitts 50 im Temperierbehälter-Kältemittelkreislauf 12 angeordnet sind.

Der Temperierbehälter-Kältemittelkreislauf 12 weist ferner einen Rückführleitungsabschnitt 56 auf. Der Rückführleitungsabschnitt 56 erstreckt zwischen einem Abzweig Ab1 stromabwärts von dem Kältemittelverdichter 22 und einem Abzweig Ab2 stromaufwärts von dem Kältemittelverdichter 22. Der Abzweig Ab1 ist zwischen der ersten Ventileinrichtung 52 und dem zweiten Wärmeübertrager 28a angeordnet. Der Abzweig Ab2 ist zwischen der zweiten Ventileinrichtung 54 und dem Kältemittelverdichter 22 angeordnet. In dem Rückführleitungsabschnitt 56 kann ein Absperrventil A1 angeordnet sein.

Für die Wärmefunktion, also ein Erwärmen bzw. Warmhalten des Temperierbehälters 10 strömt vom Kältemittelverdichter 22 verdichtetes Kältemittel über das entsprechend eingestellte erste 3/2-Wege-Ventil 52 in dem Umkehrleitungsabschnitt 50. Anschließend wird das Kältemittel durch das entsprechend eingestellte zweite 3/2-Wege-Ventil 54 zum ersten Wärmeübertrager 24 geleitet. Der erste Wärmeübertrager 24 wirkt dann als Gaskühler bzw. Kondensator. Das Kältemittel wird anschließend mittels des Expansionsventils 26 entspannt und der weiteren Wärmeübertrageranordnung 28 bzw. dem zweiten Wärmeübertrager 28a zur dortigen Wärmeaufnahme und Verdampfung zugeführt. Anschließend strömt das Kältemittel über den Abzweig Ab1, den Rückführleitungsabschnitt 56 und den Abzweig Ab2 wieder zum Kältemittelverdichter 22. Dabei ist das Absperrventil A1 in dem Rückführleitungsabschnitt 56 geöffnet.

Für die Kühlfunktion strömt das vom Kältemittelverdichter 22 verdichtete Kältemittel über das entsprechend eingestellte erste 3/2-Wege-Ventil 52 zu der weiteren Wärmeübertrageranordnung 28 bzw. dem zweiten Wärmeübertrager 28a. Dabei wirkt der zweite Wärmeübertrager 28a als Gaskühler bzw. Kondensator. Anschließend wird das Kältemittel mittels des Expansionsventils 26 in den ersten Wärmeübertrager 24 entspannt. Der erste Wärmeübertrager 24 dient dann als Verdampfer. Über das entsprechend eingestellte zweite 3/2-Wege-Ventil 54 wird das Kältemittel wieder dem Kältemittelverdichter 22 zugeführt. Im Kühlbetrieb sind der Umkehrleitungsabschnitt 50 und der Rückführleitungsabschnitt 56 aufgrund der Einstellung der 3/2-Wege-Ventile 52, 54 bzw. des geschlossenen Absperrventils A1 nicht aktiv von Kältemittel durchströmt.

Mit anderen Worten kann der Temperierbehälter-Kältemittelkreislauf 12 in Abhängigkeit von den Einstellungen der Ventileinrichtungen 52, 54, A1 im Kühlbetrieb oder im Wärmebetrieb eingestellt werden, um den Temperierbehälter 10 entweder zu kühlen oder zu erwärmen.

Die in den Figuren 1 bis 3 gezeigten Ausführungsformen unterscheiden sich durch die Art, wie die weitere Wärmeübertrageranordnung 28 aufgebaut bzw. umgesetzt ist bzw. deren Einzelkomponenten 28a, 28b und 28c zueinander angeordnet sind bzw. angeordnet und platziert sein können.

In Fig. 1 ist die Wärmeübertrageranordnung 28 als indirekter Gaskühler bzw. indirekter Kondensator 28a ausgeführt. In dem Temperierbehälter-Kältemittelkreislauf 12 wird im Kühlbetrieb das durch den Kältemittelverdichter 22 verdichtete und somit heiße Kältemittel am indirekten Gaskühler bzw. Kondensator 28a auf Hochdruckniveau abgekühlt, indem Wärme an das Kühlmittel (beispielsweise Wasser oder Wasser-Glykol-Gemisch) im Kühlmittelkreislauf 30 abgegeben wird. Im Wärmebetrieb wird das umgekehrt durch den indirekten Gaskühler bzw. Kondensator 28a strömende Kältemittel verdampft, wobei die Wärmeübertrageranordnung 28 als Verdampfer auf Niederdruckniveau arbeitet.

Das Kühlmittel bzw. Kühlwasser zirkuliert in dem Kühlmittelkreislauf 30, der als Niedertemperaturkreis zur Kühlung von wenigstens einer Hochvolt-Komponente, hier beispielhaft der Batterie 32, ausgebildet ist. Der Kühlmittelkreis kann aktiv oder/und passiv kühlbar ausgelegt sein. Es ist beispielsweise möglich, die Kühlung des Kühlmittels über Umgebungsluft an dem Niedertemperaturkühler 34b zu ermöglichen. Alternativ oder auch ergänzend (kumulativ) kann auch ein Chiller 34a in den Kühlmittelkreislauf 30 eingebunden sein. Das Temperaturniveau von Kühlmittel im Kühlmittelkreislauf 30 liegt üblicherweise auf Umgebungstemperaturniveau oder darunter. Dabei ist in der Regel eine Zirkulation von Kühlmittel insbesondere wegen des Spülbedarfs der Batterie 32 zu deren thermischen Homogenisierung stets gegeben.

Da die Batterie 32 üblicherweise im Bereich Fahrgastraum oder auch unterhalb bzw. im Bereich des Kofferraums 14 angeordnet ist, ist keine umständliche kühlmittelseitige Verschaltung im Kühlmittelkreis 30 erforderlich um die thermische Kopplung mit der Wärmeübertrageranordnung 28 und somit dem Temperierbehälter-Kältemittelkreislauf 12 zu ermöglichen.

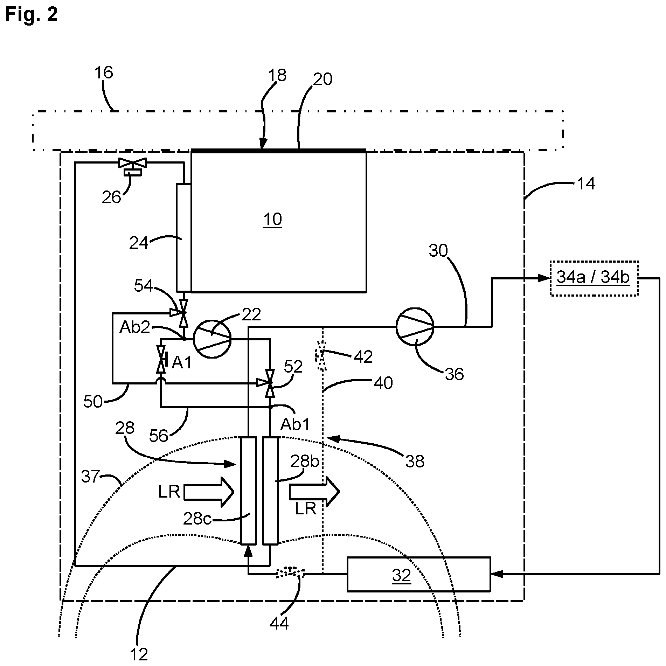

In Fig. 2 ist eine weitere Ausführungsform dargestellt, bei der die Wärmeübertrageranordnung 28 einen mit Luft, insbesondere (Teil-)Umluft oder/und Frischluft, beaufschlagten Kondensator 28b als zweiten Wärmeübertrager aufweist, der in dem Temperierbehälter-Kältemittelkreislauf 12 angeordnet ist. Ferner umfasst die Wärmeübertrageranordnung 28 einen mit dem Kühlmittelkreislauf 30 verbundenen dritten Wärmeübertrager 28c. In diesem Beispiel ist der dritte Wärmeübertrager 28c mit Luft, insbesondere (Teil-)Umluft oder/und Frischluft, beaufschlagt. Bezogen auf die Luftströmungsrichtung LR ist der zweite Wärmeübertrager 28c stromaufwärts von dem ersten, mit Luft beaufschlagten Wärmeübertrager 28b angeordnet. Eine kältemittelseitig umgekehrte Durchströmung und damit vertauschte Anordnung der beiden Wärmeübertrager 28b und 28c wäre ebenfalls denkbar. Jedoch ist im Fall einer aktiven Batteriekühlung meist das Kühlmittel zumeist niedriger temperiert als der Luftstrom und somit diese Option weniger vorteilhaft, aber nicht ausgeschlossen.

Es ist alternativ auch denkbar auf den dritten, mit Luft beaufschlagten Wärmeübertrager 28c, seinerseits eingebunden in den Kühlm ittelkreis 30, zu verzichten und den Temperierbehälter-Kältemittelkreislauf 12 ausschließlich über die Wärmeübertrageranordnung 28 und den damit zweiten Wärmeübertrager 28b in Form einer Wärmeaufnahme aus dem Kältemittel bzw. einer Wärmeabgabe an das Kältemittel zu konditionieren, ohne dass dieser mit einem Kühlmittelkreis 30 in Verbindung steht.

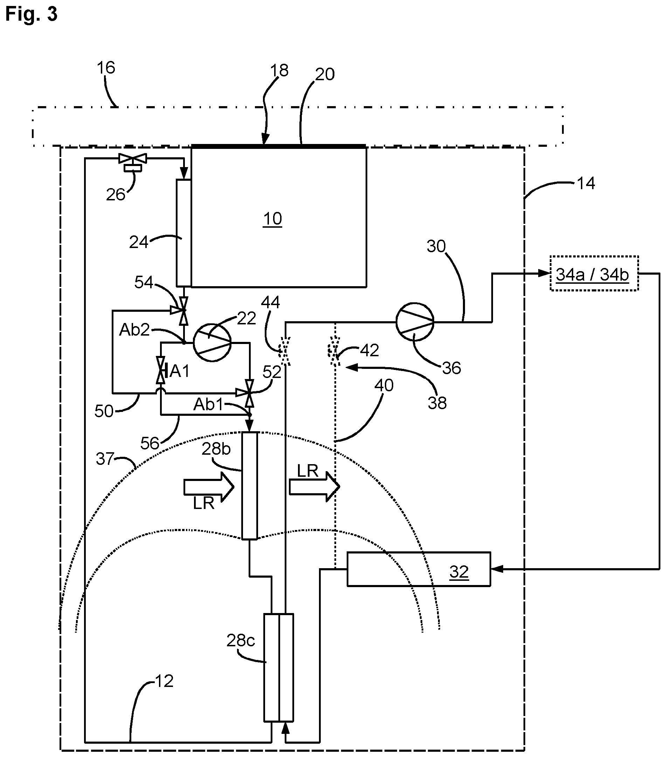

In Fig. 3 ist eine weitere Ausführungsform dargestellt, bei der die weitere Wärmeübertrageranordnung 28 ebenfalls einen mit Luft, insbesondere (Teil-) Umluft oder/ und Frischluft, beaufschlagten Kondensator 28b als zweiten Wärmeübertrager aufweist, der in dem Temperierbehälter-Kältemittelkreislauf 12 angeordnet ist. Der dritte Wärmeübertrager 28c ist in diesem Beispiel ein indirekter Kondensator, der im Temperierbehälter-Kältemittelkreislauf 12 angeordnet ist und in Strömungsrichtung des Kältemittels stromabwärts von dem ersten, mit Luft beaufschlagten Wärmeübertrager 28b angeordnet ist (bezogen auf den Kühlbetrieb). Alternativ kann der als indirekter Kondensator ausgeführte dritte Wärmeübertrager 28c bezogen auf die Kältemittelströmungsrichtung im Kühlbetrieb auch stromaufwärts von dem zweiten Wärmeübertrager 28b angeordnet sein. Eine kältemittelseitig umgekehrte Durchströmung und damit vertauschte Anordnung der beiden Wärmeübertrager 28b und 28c wäre ebenfalls denkbar. Jedoch ist im Fall einer aktiven Batteriekühlung das Kühlmittel zumeist niedriger temperiert als der Luftstrom und somit diese Option weniger vorteilhaft, aber nicht ausgeschlossen.

In den Figuren 2 und 3 ist jeweils mit strichpunktierten Linien ein Luftführungskanal 37 angedeutet, der Luft zu der weiteren Wärmeübertrageranordnung 28, insbesondere den konkreten, mit Luft beaufschlagten Wärmeübertragern 28b (Fig. 2 und 3), 28c (Fig. 2) zuführen kann. Der Verlauf des Luftführungskanals 37 ist rein schematisch gezeigt. Diesem Luftzuführungskanal 37 kann beispielsweise Frischluft von außerhalb des Fahrzeugs oder/und Umluft aus dem Innenraum des Fahrzeugs zugeführt werden. Selbstverständlich kann der im Luftzuführungskanal 37 befindliche Luftstrom auch eine Mischung aus Frischluft und Umluft sein, also ein sogenannter Teil-Umluftstrom.

Durch die Kombination unterschiedlicher Wärmeübertrager 28b, 28c gemäß den Ausführungsformen der Fig. 2 und 3 ist es möglich, je nach Temperaturniveau im Umfeld des Temperierbehälters gezielt die jeweilige Wärmesenke, also den zweiten oder/und den dritten Wärmeübertrager 28b, 28c einzusetzen. Mit anderen Worten können der zweite oder/und der dritte Wärmeübertrager insbesondere in Abhängigkeit von im Temperierbehälter-Kältemittelkreislauf 12, im Kühlmittelkreis 30, in der Umgebung, im Innenraum erfassten Temperaturen aktiv oder passiv geschaltet werden.

Damit der mit dem Kühlmittelkreislauf 30 verbundene Wärmeübertrager 28a (Fig. 1) bzw. 28c (Fig. 2 und 3) als Wärmesenke für den Temperierbehälter-Kältemittelkreislauf 12 deaktiviert werden kann, kann in dem Kühlmittelkreislauf 30 eine Bypassanordnung 38 vorgesehen sein, die dazu eingerichtet ist, Kühlmittel an der Wärmeübertrageranordnung 28 vorbeizuleiten. In den Beispielen der Fig. 1 bis 3 ist die Bypassanordnung 38 gestrichelt dargestellt. Sie kann beispielsweise einen Bypassabschnitt 40 aufweisen, der Kühlmittel strömungstechnisch parallel am Wärmeübertrager 28a bzw. 28c vorbei leiten kann. Ferner können absperrbare Ventilorgane 42, 44, welche beispielsweise auch als Kombinationsventil in der Ausführung als 3-2-Wege-Ventil oder Misch- bzw. Drehstellerventil umgesetzt werden können, vorgesehen sein, die wahlweise geöffnet bzw. geschlossen sind, um den Kühlmittelfluss im Kühlmittelkreislauf 30 zu steuern. Eine Passivschaltung des luftbeaufschlagten Wärmeübertragers 28b kann mittels Deaktivierung eines nicht dargestellten Luftkanalgebläses erfolgen, so dass der Zuluftstrom abgestellt ist.

Über eine nicht dargestellte Verstellvorrichtung an dem Temperierbehälter 20 oder in alternativer Position wie bspw. einem Multimediainterface, können die gewünschten Einstellungen an dem Temperierbehälter 20 vorgenommen werden, wie bspw. die Definition von Kühl- bzw. Heizbedarf sowie der jeweiligen Temperatur und/oder Beginn bzw. Ende und/oder Dauer des Vorganges , etc. Die Verstellvorrichtung ist dabei mit einem Steuergerät gekoppelt, das seinerseits die Prozessführung anstößt, regelt und überwacht.

## Patentansprüche

1. Kraftfahrzeug mit einem Temperierbehälter (10),
einem ersten Wärmeübertrager (24) für die Temperierung des Temperierbehälters (10),
einem Temperierbehälter-Kältemittelkreislauf (12), der mit dem ersten Wärmeübertrager (24) verbunden ist und der einen Kältemittelverdichter (22) sowie wenigstens ein dem ersten Wärmeübertrager (24) zugeordnetes Expansionsventil (26) aufweist,
einer weiteren Wärmeübertrageranordnung (28), die wenigstens einen zweiten Wärmeübertrager (28a, 28b, 28c) aufweist, der mit einem Kühlmittelkreislauf (30) des Kraftfahrzeugs verbunden ist, wobei der Kühlmittelkreislauf (30) mit wenigstens einer elektrischen Antriebs- oder Speicherkomponente (32), insbesondere einer Batterie des Kraftfahrzeugs, zu deren Kühlung verbunden ist, und wobei der Kühlmittelkreislauf (30) einen Chiller (34a), der mit einem Fahrzeug-Kältemittelkreislauf verbunden ist, oder/und einen über Umgebungsluft gekühlten Niedertemperatur-Kühler (34b) aufweist,
**dadurch gekennzeichnet, dass**
der Temperierbehälter-Kältemittelkreislauf (12) dazu eingerichtet ist, Kältemittel in unterschiedlichen Strömungsrichtungen durch den ersten Wärmeübertrager (24) zu leiten, und der Temperierbehälter-Kältemittelkreislauf (12) einen Umkehrleitungsabschnitt (50) aufweist, der stromabwärts von dem Kältemittelverdichter (22) und stromaufwärts von dem zweiten Wärmeübertrager (28a, 28b, 28c) abzweigt.

2. Kraftfahrzeug nach Anspruch 1, **dadurch gekennzeichnet, dass** der Umkehrleitungsabschnitt (50) stromaufwärts von dem Kältemittelverdichter (22) und zwischen dem ersten Wärmeübertrager (24) und dem Kältemittelverdichter (22) derart mündet, dass vom Kältemittelverdichter (22) unter Hochdruck gefördertes Kältemittel durch den ersten Wärmeübertrager (24) strömt.

3. Kraftfahrzeug nach Anspruch 1 oder 2, **dadurch gekennzeichnet, dass** der Temperierbehälter-Kältemittelkreislauf (12) wenigstens eine Ventileinrichtung (52, 54), insbesondere wenigstens ein 3/2-Wege-Ventil, aufweist, die dazu eingerichtet ist, den Kältemittelfluss durch den Umkehrleitungsabschnitt (50) zu ermöglichen oder zu verhindern.

4. Kraftfahrzeug nach einem der vorhergehenden Ansprüche, **dadurch gekennzeichnet, dass** die weitere Wärmeübertrageranordnung (28) einen mit Luft, insbesondere Umluft oder/und Frischluft, beaufschlagten Kondensator als zweiten Wärmeübertrager (28b) aufweist, der in dem Temperierbehälter-Kältemittelkreislauf (12) angeordnet ist, und einen mit dem Kühlmittelkreislauf (30) verbundenen dritten Wärmeübertrager (28c) aufweist.

5. Kraftfahrzeug nach Anspruch 4, **dadurch gekennzeichnet, dass** der dritte Wärmeübertrager (28c) mit Luft, insbesondere Umluft oder/und Frischluft, beaufschlagt ist und bezogen auf die Luftströmungsrichtung (LR) stromaufwärts von dem zweiten, mit Luft beaufschlagten Wärmeübertrager (28b) angeordnet ist.

6. Kraftfahrzeug nach Anspruch 4, **dadurch gekennzeichnet, dass** der dritte Wärmeübertrager (28c) ein indirekter Gaskühler oder ein indirekter Kondensator ist, der im Temperierbehälter-Kältemittelkreislauf (12) angeordnet ist und in Strömungsrichtung des Kältemittels stromabwärts oder stromaufwärts von dem zweiten, mit Luft beaufschlagten Wärmeübertrager (28b) angeordnet ist.

7. Kraftfahrzeug nach einem der vorhergehenden Ansprüche, **dadurch gekennzeichnet, dass** in dem Kühlmittelkreislauf (30) eine Bypassanordnung (38) vorgesehen ist, die dazu eingerichtet ist, Kühlmittel an der weiteren Wärmeübertrageranordnung (28) vorbei zu leiten.

8. Kraftfahrzeug nach einem der vorhergehenden Ansprüche, wobei es elektrisch angetrieben ist, wobei das Kraftfahrzeug einen Hochvoltspeicher (32) aufweist, der mittels des Kühlmittelkreislaufs (30) kühlbar ist,
wobei der Temperierbehälter (10) mit seinem Temperierbehälter-Kältemittelkreislauf (12) in einem hinteren Bereich des Kraftfahrzeugs angeordnet ist, insbesondere zumindest teilweise in einem heckseitigen Kofferraum (14) angeordnet ist.

9. Kraftfahrzeug nach Anspruch 8, **dadurch gekennzeichnet, dass** der Temperierbehälter (10) eine verschließbare Öffnung (18) aufweist, die einem Innenraum des Kraftfahrzeugs zugewandt ist, derart, dass zu temperierendes Gut vom Innenraum her in den Temperierbehälter (10) einfüllbar oder aus diesem entnehmbar ist.

## Claims

1. A motor vehicle having a temperature-control container (10),
a first heat exchanger (24) for controlling the temperature of the temperature-control container (10),
a temperature-control container coolant circuit (12), which is connected to the first heat exchanger (24) and which has a coolant compressor (22) and at least one expansion valve (26) associated with the first heat exchanger (24),
a further heat exchanger arrangement (28), which has at least one second heat exchanger (28a, 28b, 28c), which is connected to a coolant circuit (30) of the motor vehicle, wherein the coolant circuit (30) is connected to at least one electric drive component or storage component (32), in particular a battery of the motor vehicle, for the cooling thereof, and wherein the coolant circuit (30) has a chiller (34a), which is connected to a vehicle coolant circuit, and/or a low-temperature cooler (34b), which is cooled via ambient air, **characterized in that** the temperature-control container coolant circuit (12) is configured to conduct coolant through the first heat exchanger (24) in different flow directions, and the temperature-control container coolant circuit (12) has a reverse line section (50) which branches off downstream of the coolant compressor (22) and upstream of the second heat exchanger (28a, 28b, 28c).

2. The motor vehicle according to claim 1, **characterized in that** the reverse line section (50) branches off upstream of the coolant compressor (22) and between the first heat exchanger (24) and the coolant compressor (22) in such a way that coolant conveyed under high pressure by the coolant compressor (22) flows through the first heat exchanger (24).

3. The motor vehicle according to claim 1 or 2, **characterized in that** the temperature-control container coolant circuit (12) has at least one valve device (52, 54), in particular at least one 3/2-way valve, which is configured to allow or prevent the flow of coolant through the reverse line section (50).

4. The motor vehicle according to any one of the preceding claims, **characterized in that** the further heat exchanger arrangement (28) has a condenser, which is supplied with air, in particular circulating air and/or fresh air, as a second heat exchanger (28b), which is arranged in the temperature-control container coolant circuit (12), and has a third heat exchanger (28c) connected to the coolant circuit (30).

5. The motor vehicle according to claim 4, **characterized in that** the third heat exchanger (28c) is supplied with air, in particular circulating air and/or fresh air, and is arranged upstream of the second heat exchanger (28b) supplied with air, relative to the air flow direction (LR).

6. The motor vehicle according to claim 4, **characterized in that** the third heat exchanger (28c) is an indirect gas cooler or an indirect condenser, which is arranged in the temperature-control container coolant circuit (12) and is arranged downstream or upstream of the second heat exchanger (28b), which is supplied with air, in the flow direction of the coolant.

7. The motor vehicle according to any one of the preceding claims, **characterized in that** a bypass arrangement (38) is provided in the coolant circuit (30), which is configured to divert coolant past the further heat exchanger arrangement (28).

8. The motor vehicle according to any one of the preceding claims, wherein it is electrically powered, wherein the motor vehicle has a high-voltage storage unit (32) which can be cooled by means of the coolant circuit (30), wherein the temperature-control container (10) is arranged with its temperature-control container coolant circuit (12) in a rear section of the motor vehicle, in particular at least partially within a rear baggage compartment (14).

9. The motor vehicle according to claim 8, **characterized in that** the temperature-control container (10) has a closable opening (18) which faces the interior of the motor vehicle, such that goods to be temperature-controlled can be loaded into or removed from the temperature-control container (10) from within the interior.

## Revendications

1. Véhicule automobile avec un contenant de thermorégulation (10),
un premier échangeur de chaleur (24) pour la thermorégulation du contenant de thermorégulation (10),
un circuit de fluide de refroidissement du contenant de thermorégulation (12) qui est relié au premier échangeur de chaleur (24) et qui présente un compresseur de fluide de refroidissement (22) ainsi qu'au moins un détendeur (26) associé au premier échangeur de chaleur (24),
un autre ensemble d'échangeur de chaleur (28) qui présente au moins un deuxième échangeur de chaleur (28a, 28b, 28c) qui est relié à un circuit de fluide de refroidissement (30) du véhicule automobile, dans lequel le circuit de fluide de refroidissement (30) est relié à au moins un composant d'entraînement ou de stockage (32) électrique, en particulier une batterie du véhicule automobile, pour son refroidissement, et dans lequel le circuit de fluide de refroidissement (30) présente une unité de refroidissement (34a) qui est reliée à un circuit de fluide de refroidissement de véhicule et/ou présente un refroidisseur basse température (34b) refroidi par de l'air ambiant, **caractérisé en ce que** le circuit de fluide de refroidissement du contenant de thermorégulation (12) est configuré afin de diriger du fluide de refroidissement dans des sens d'écoulement différents à travers le premier échangeur de chaleur (24), et le circuit de fluide de refroidissement du contenant de thermorégulation (12) présente une section de conduite d'inversion (50) qui bifurque en aval du compresseur de fluide de refroidissement (22) et en amont du deuxième échangeur de chaleur (28a, 28b, 28c).

2. Véhicule automobile selon la revendication 1, **caractérisé en ce que** la section de conduite d'inversion (50) débouche en amont du compresseur de fluide de refroidissement (22) et entre le premier échangeur de chaleur (24) et le compresseur de fluide de refroidissement (22) de telle manière que du fluide de refroidissement acheminé sous haute pression par le compresseur de fluide de refroidissement (22) s'écoule à travers le premier échangeur de chaleur (24).

3. Véhicule automobile selon la revendication 1 ou 2, **caractérisé en ce que** le circuit de fluide de refroidissement du contenant de thermorégulation (12) présente au moins un dispositif de soupape (52, 54), en particulier au moins une soupape 3/2 voies, qui est configuré afin de permettre ou d'empêcher le flux de fluide de refroidissement à travers la section de conduite d'inversion (50).

4. Véhicule automobile selon l'une quelconque des revendications précédentes, **caractérisé en ce que** l'autre ensemble d'échangeur de chaleur (28) présente un condensateur alimenté en air, en particulier en air de circulation et/ou en air frais, comme deuxième échangeur de chaleur (28b) qui est agencé dans le circuit de fluide de refroidissement du contenant de thermorégulation (12) et présente un troisième échangeur de chaleur (28c) relié au circuit de fluide de refroidissement (30).

5. Véhicule automobile selon la revendication 4, **caractérisé en ce que** le troisième échangeur de chaleur (28c) est alimenté en air, en particulier en air de circulation et/ou en air frais, et est agencé en amont du deuxième échangeur de chaleur (28b) alimenté en air par rapport au sens d'écoulement de l'air (LR).

6. Véhicule automobile selon la revendication 4, **caractérisé en ce que** le troisième échangeur de chaleur (28c) est un refroidisseur de gaz indirect ou un condensateur indirect qui est agencé dans le circuit de fluide de refroidissement du contenant de thermorégulation (12) et est agencé en aval ou en amont du deuxième échangeur de chaleur (28b) alimenté en air dans le sens d'écoulement du fluide de refroidissement.

7. Véhicule automobile selon l'une quelconque des revendications précédentes, **caractérisé en ce qu'**un ensemble de dérivation (38) est prévu dans le circuit de fluide de refroidissement (30), lequel ensemble est configuré afin de guider le fluide de refroidissement au-delà de l'autre ensemble d'échangeur de chaleur (28).

8. Véhicule automobile selon l'une quelconque des revendications précédentes, dans lequel il est entraîné électriquement, dans lequel le véhicule automobile présente un accumulateur haute tension (32) qui peut être refroidi au moyen du circuit de fluide de refroidissement (30), dans lequel le contenant de thermorégulation (10) est agencé avec son circuit de fluide de refroidissement du contenant de thermorégulation (12) dans une zone arrière du véhicule automobile, en particulier est agencé au moins partiellement dans un espace de coffre (14) côté arrière.

9. Véhicule automobile selon la revendication 8, **caractérisé en ce que** le contenant de thermorégulation (10) présente une ouverture refermable (18) qui est tournée vers un espace intérieur du véhicule automobile de telle manière que des marchandises à thermoréguler puissent être remplies depuis l'espace intérieur dans le contenant de thermorégulation (10) ou retirées de celui-ci.
